# EUROPEAN PATENT SPECIFICATION

(11) **EP 3 716 398 B1**
(45) Date of publication and mention of the grant of the patent: **28.01.2026**
(21) Application number: 20174916.5
(22) Date of filing: 03.05.2018
(51) Int. Cl.: H01Q 1/22, G06K 19/077

(54) **METAL VENEER SMARTCARDS**
SMARTCARDS MIT METALLFURNIER
CARTES À PUCE INTELLIGENTE RECOUVERTE DE MÉTAL

(30) Priority: 03.05.2017 US 201762500618 P; 28.07.2017 US 201715662305; 30.07.2017 US 201762538711 P; 06.11.2017 US 201715803866; 21.11.2017 US 201715818785; 29.03.2018 US 201815939281; 29.03.2018 US 201815939282
(43) Date of publication of application: 30.09.2020
(62) Divisional of application: 18726734.9
(73) Proprietor: FÉINICS AMATECH TEORANTA, Dublin 16, D16 X8C3 (IE)
(72) Inventor: FINN, David, Tourmakeady, Ireland (IE); LOTYA, Mustafa, Celbridge, Ireland (IE); MOLLOY, Darren, County Galway, Ireland (IE)
(74) Representative: Cremer & Cremer

(56) References cited:
- US-A1- 2015 136 858
- US-A1- 2017 017 871
- US-A1- 2017 077 589

## Description

### TECHNICAL FIELD

The disclosure relates broadly to RFID devices, particularly to dual interface metal veneer cards having RFID (radio frequency identification) chips or chip modules (CM) capable of operating in a "contactless" mode (ISO 14443 or NFC/ISO 15693), wherein the dual interface (DI) metal veneer card can also operate in "contact" mode (ISO 7816-2).

### BACKGROUND

A smartcard is an example of an RFID device that has a transponder chip module (TCM) or an antenna module (AM) disposed in a card body (CB) or an inlay substrate.

The antenna module (AM) or antenna chip module, which may be referred to as a transponder chip module (TCM) may generally comprise:
- a module tape (MT) or chip carrier tape (CCT), more generally, simply a support "substrate";
- an RFID chip (CM, IC) which may be a bare, unpackaged silicon die or a chip module (a die with leadframe, interposer, carrier or the like), typically disposed on a "face-down side" or "bond side" or "chip side" (or surface) of the module tape (MT);
- the RFID chip may have an antenna integrated therein, but generally a module antenna (MA) is typically required to effect contactless communication between the RFID chip and another RFID device such as an external contactless reader;
- a module antenna (MA) or antenna structure (AS), typically disposed on the same face-down side of the module tape (MT) as the RFID chip (IC), and connected therewith, for implementing a contactless interface, such as ISO 14443 and NFC/ISO 15693 with a contactless reader or other RFID device.

When operating in a contactless mode, a passive antenna module (AM) or transponder chip module (TCM) may be powered by RF from an external RFID reader, and may also communicate by RF with the external RFID reader.

A dual-interface antenna module (AM) or transponder chip module (TCM) may also have a contact pad array (CPA), typically comprising 6 or 8 contact pads (CP, or "ISO pads") disposed on a "face-up side" or "contact side" (or surface) of the module tape (MT), for interfacing with a contact reader in a contact mode (ISO 7816). A connection bridge (CBR) may be disposed on the face-up side of the tape for effecting a connection between two components such as the module antenna and the RFID chip on the other face-down side of the module tape.

A conventional antenna module (AM) or transponder chip module (TCM) may be generally rectangular, having four sides, and measuring approximately 8.2 mm x 10.8 mm for a 6-contact module and 11.8 mm x 13.0 mm for an 8-contact module. As disclosed herein, a generally rectangular transponder chip module (TCM) may have a larger or smaller form factor than a conventional transponder chip module (TCM). Alternatively, the transponder chip module (TCM) may be round, elliptical, or other non-rectangular shape.

A module antenna (MA) may be disposed on the module tape (MT) for implementing a contactless interface, such as ISO 14443 and NFC/ISO 15693. Contact pads (CP) may be disposed on the module tape (MT) for implementing a contact interface, such as ISO 7816.

A planar antenna (PA) structure, or simply "planar antenna (PA)", whether chemically-etched (CES) or laser-etched (LES), is a type of antenna structure (AS) and may comprise a long conductive trace or track having two ends, in the form of a planar, rectangular spiral, disposed in an outer area of a module tape (MT), surrounding the RFID chip on the face-down side of the module tape. This will result in a number of traces or tracks (actually, one long spiraling trace or track), separated by spaces (actually, one long spiraling space). The track (or trace) width may be approximately 100 µm. The planar antenna may be fabricated on other than the module tape, such as on a separate substrate, and joined to the module tape.

US 8,672,232 discloses a card which includes a first assembly comprised of multiple plastic layers attached via an adhesive to a metal layer. The multiple plastic layers forming the first assembly are laminated under a first selected temperature and pressure conditions to preshrink the multiple plastic layers, stress relieve the first assembly and render the first assembly dimensionally stable. The laminated first assembly is then attached to a metal layer via an adhesive layer to form a second assembly which is then laminated at a temperature below the first selected temperature to form a card which is not subjected to warpage and delamination. Claim 1 therein describes:
A method of making a card comprising the steps of:
forming a first assembly of a first predetermined thickness, said first assembly including at least two layers of plastic material;
firstly laminating the at least two layers of different plastic material at a first predetermined temperature and pressure for forming said first assembly;
wherein said first lamination step comprises preshrinking the at least two layers of plastic material and reducing subsequent dimensional changes of the layers forming the first assembly;
secondly forming a second assembly including said first assembly and a metal layer with an adhesive layer between the first assembly and the metal layer; and
laminating the second assembly at a temperature which is lower than the first predetermined temperature.

Claim 11 therein describes:
A card comprising:
a first assembly comprised of multiple plastic layers which wherein the multiple plastic layers have been laminated at a first temperature and pressure to preshrink the layers and reduce their subsequent dimensional changes;
said first assembly having an inner surface and an outer surface; the outer surface defining one of the top and bottom side of the card;
a layer of metal material and an adhesive layer; the layer of metal material having an inner surface and an outer surface;
the inner surface of the layer of metal material being attached to the inner surface of the first assembly via said adhesive layer, the combination of said first assembly, adhesive layer and the metal layer forming a second assembly which is laminated at a temperature which is less than the first temperature, and wherein the outer surface of the layer of metal material defines the other one of the top and bottom side of the card.

### Smartcard Construction

A typical smartcard includes multiple layers of white plastic made from polyvinyl chloride (PVC) with a clear PVC layer on top. Standard PVC films (homo-polymer) have a VICAT softening point at 76 °C. The top transparent layer is referred to as an overlay and can be made of a different material film to PVC, such as a polycarbonate-based material (laser engravable). The overlay film usually has a backside coating of polyamide hotmelt, but the overlay can also be uncoated. The overlay protects the surface artwork and increases the card's shelf life. An overlay is required for cards with security features and/or magnetic stripes, and must be used with full-face foil cards. The card construction may comprise synthetic plastic materials such as ABS, PC, PVC, PETG, polyester, etc.

### Observations Concerning US 8,672,232

In the teachings of US 8,672,232**,** there is no mention made that the first plastic assembly could be a single layer. Wherein the single plastic layer is laminated at a temperature and pressure to preshrink the layer and reduce its subsequent dimensional change. This preshrinking procedure of the single plastic layer could be performed prior to printing of the artwork.

In the teachings of US 8,672,232**,** there is no mention made of having multiple metal layers, for example two metal layers, in which the first plastic assembly is laminated to a first metal layer, and separately, a second plastic assembly is laminated to a second metal layer. In a final step, the first plastic metal layer is adhesively attached to the second plastic metal layer.

In the teachings of US 8,672,232**,** there is no mention made that a single plastic layer or two plastic layers with opposing grain direction could be laminated to a metal layer to facilitate the preshrinking process, before laminating or adhesively attaching the artwork layer und overlay layer to the metal plastic assembly.

In the teachings of US 8,672,232**,** there is no mention made that the degree of shrinkage of the polymer layer(s) is directly related to the size of the sheets being laminated. In other words, the smaller the sheet size the lesser the effect of shrinkage. Equally, the size and thickness of the metal layer being laminated to the plastic layer has an influence on the transfer of heat and the ultimate shrinkage of the plastic layer, conversely, the smaller the metal layer the greater the control over the shrinkage of the plastic layer.

In the teachings of US 8,672,232**,** there is no mention made that the first assembly layer shrinks greater in the grain direction than the other direction.

In the teachings of US 8,672,232**,** there is no mention made that the plastic assembly layer(s) could be dimensionally different to the size of the metal sheet.

In the teachings of US 8,672,232**,** there is no mention made that the metal sheet with the upper and lower plastic assemblies used to form cards could be punched out from the laminated stack-up. Instead, "the first assembly is then attached via an appropriate adhesive to a sheet of metal material to form a second assembly. The second assembly is then laminated at a second temperature which is lower than the first temperature to form a laminated "metal-plastic" sheet which can then be cut to form individual cards. The individual cards may be subsequently personalized.

In the teachings of US 8,672,232**,** there is no mention made that the final lamination process to assembly the card body could be performed on a single card stack-up construction, instead of a "metal-plastic" sheet.

In the teachings of US 8,672,232**,** there is no mention made that the final lamination process to assembly the card body could be performed on a single card stack-up construction, using a slightly oversized card format, instead of a "metal-plastic" sheet. In a subsequent process the edges of the laminated oversized card stack-up could be milled, trimmed or otherwise adjusted to bring the dimensions of the laminated oversized card stack-up to the desired value.

In short, US 8,672,232 describes two plastic layers laminated at a first temperature, then laminated with an adhesive layer to a metal layer at a second temperature (lower than the first).

Some options (alternatives, different constructions) include the following:
1. One plastic layer, other layers could be made of a metal foil (holofoil), paper, fleece, etc.
2. Only one laminating step
3. There are two laminating steps, but the second step (overlays) may have the same or a higher temperature than the first laminating step
4. Laminate at least one plastic layer to at least one metal layer to create a clad ("prelam", or "core", or subassembly "SAS") then laminate outer layers to at least one of the front and back of the clad. The outer layers may comprise a printed layer and an overlay. Outer layers disposed on the front of the clad may be referred to as "front (face) subassembly", outer layers disposed on the rear of the clad may be referred to as "back (face)subassembly". The outer layers (front and/or rear face subassemblies) are typically card-size (having outer dimensions the same as the overall card). Some inner metal layers of the card may have outer dimensions smaller than those of the overall card.

In a one laminating step, the front clear overlay layer, the front printed plastic layer, an adhesive layer, the core metal layer, an adhesive layer, the rear printed plastic layer and the rear clear overlay layer (with magnetic stripe) are laminated together in one step at a defined temperature and pressure. The core metal may consist of two metal layers adhesively attached together prior to the one step lamination process with the plastic layers.

Other considerations are larger graphics to compensate for shrinkage, revised lamination processes to control cold and hot lamination cycles with modified duration times and pressure, and the type of lamination plates.

Some alternate constructions may be described hereinbelow, with reference to alternate embodiments, examples or constructions (methods for manufacturing) of dual interface metal veneer cards, according to the invention.

US 2017/0017871 A1 discloses, among others, smartcards having multiple metal layers, further including a shielding layer of magnetic material between some of the metal layers (see Fig. 16B therein).

US 2017/0077589 A1 discloses hybrid metal smartcards combining layers of different materials and thicknesses.

Finally, US 2015/0136858 A1 is concerned with variations of contact pads designs and fragmentation of metal layers in smartcards and wearable RFID devices.

### SUMMARY

It is a general object of the invention to improve dual interface metal veneer smartcards.

The invention is defined in claim 1. Preferred embodiments of inventive dual interface metal veneer cards are subject matter of the dependent claims.

The second metal layer may have a slit (S) extending from its periphery (outer edge) to an inner position thereof, with the slit arranged to overlap at least a portion of a module antenna of the transponder chip module, so as to function as a coupling frame (CF). Typically, the slit (S) will extend to an opening (MO) for the transponder chip module (TCM).

In some instances, an edge profile of a metal layer may be such that an outer edge of the metal layer overlaps a module antenna, and the metal layer may function as a coupling frame, without requiring a slit (or module opening).

According to some embodiments (examples) of the invention, a smartcard may comprise: a subassembly (SAS) comprising at least the two metal layers (ML); and a dielectric layer (AL) disposed (sandwiched) between and joined to the two metal layers. Inner plastic layers (IPL) may be disposed on outer surfaces of the metal layers.

In some of the embodiments disclosed herein, a capacitor (CAP) may be connected across the slit (S).

In the following a possible method of manufacturing metal veneer smartcards from pre-laminated metal inlays is described; it may comprise: providing a metal sheet with a thickness of 550 µm in an inlay format, 2 x 8, 4 x 8, 2 x 7, 4 x 7, etc., having an array of card body positions with each site prepared with: a window (13.1 mm x 11.9 mm, depth ~ 250 µm and a lip of 1.3 mm) to accept the implant of a chip module and an opening (9.5 mm x 8.5 mm) in the metal to accommodate the mold mass of the chip module, a laser defined slit (with a width of ~100 µm or less at the front face) extending from each opening to an area beyond the periphery edge of each card site, a recess area (mechanically milled, eroded or chemically etched) with a depth of ~200 µm at each site on the underside of the metal sheet around the area of the opening and slit leaving a stepped frame around the perimeter edge of the opening to enhance the mechanical strength, and stuffing the recess area with an adhesive backed plastic insert or non-conductive insert to re-stabilize the area around the slit; providing a rear adhesive layer (~75 µm) and a synthetic plastic layer (~50 µm) to the underside of the mechanically prepared metal sheet and in a first production step laminating the sandwich to create a pre-laminated metal inlay for metal veneer smartcards. A Mylar plastic sheet may be attached to the front face of the metal sheet to protect against scratches during handling and processing. A plastic slug may be disposed in the opening to accept a chip module at each site in the metal inlay sheet prior to pre-lamination. In a second production step, a rear clear overlay layer (~50 µm) and a rear printed layer (~125 µm) are laminated to the pre-laminated metal inlay. Card bodies are extracted from the final laminated sheet and personalized.

The coupling frame antenna in the above configurations may be referred to as a "single loop horseshoe antenna" with a slit/void and opening to accommodate the transponder chip module. The slit/void may be eliminated by changing the form of the single turn closed loop antenna having the module antenna of the transponder chip module overlapping one or more positions on the continuous closed circuit loop. In essence, the shape of the antenna may not be rectangular.

Other objects, features and advantages of the invention(s) disclosed herein, and their various embodiments, may become apparent in light of the descriptions of some exemplary embodiments that follows.

### BRIEF DESCRIPTION OF THE DRAWINGS

Reference will be made in detail to embodiments of the disclosure, non-limiting examples of which may be illustrated in the accompanying drawing figures (FIGs). Some figures may be in the form of diagrams. Some elements in the figures may be exaggerated, others may be omitted, for illustrative clarity.

Any text (legends, notes, reference numerals and the like) appearing on the drawings are incorporated by reference herein.

Some elements may be referred to with letters ("AM", "CES", "CF", "CM", "IPL", "LES", "MA", "MT", "ML", "MO", "NCS", "OL", "PCL", "S", "SAS", "TCM", etc.) rather than or in addition to numerals. Some similar (including substantially identical) elements in various embodiments may be similarly numbered, with a given numeral such as "2020", followed by different letters such as "A", "B", "C", etc. (resulting in "2020A", "2020B", "2020C"), and variations thereof, and may be collectively (all of them at once) or individually (one at a time) referred to simply by the numeral ("2020").

The figures presented herein show different embodiments of RFID devices, such as metal veneer smartcards. Some of the drawings may omit components such as the transponder chip module or module antenna, for illustrative clarity. Some of the figures may show only components of an RFID device, such as coupling frames or plastic-metal-plastic inlays.
**FIG.** 1 is detailed view of a chip module.
**FIG.** 2A is an exploded view of a metal veneer smartcard with slit (S) on the front metal layer (ML), not covered by the appended claims.
**FIG.** 2B is a close up of the rear side of a metal layer (ML) used in a smartcard showing a raised profile about the module opening designed to prevent metal warpage in the area of a recess to accommodate a transponder chip module (TCM), not covered by the appended claims.
**FIG.** 3 is an exploded view of a metal veneer smartcard with two metal layers (ML) to form the core, each functioning as a coupling frame (ML), not covered by the appended claims.
**FIG.** 4 is an exploded view of a metal veneer smartcard with two metal layers (ML) wherein an inner metal layer (ML) features a slit (S) and functions as a coupling frame (CF), being electromagnetically shielded from the first metal layer (ML) with suitably shaped shielding material.

### DETAILED DESCRIPTION

Various embodiments (or examples) may be described to illustrate teachings of the invention(s), and should be construed as illustrative rather than limiting. It should be understood that it is not intended to limit the invention(s) to these particular embodiments. It should be understood that some individual features of various embodiments may be combined in different ways than shown, with one another. Reference herein to "one embodiment", "an embodiment", or similar formulations, may mean that a particular feature, structure, operation, or characteristic described in connection with the embodiment is included in at least one embodiment of the present invention. Some embodiments may not be explicitly designated as such ("an embodiment").

The embodiments and aspects thereof may be described and illustrated in conjunction with systems, devices and methods which are meant to be exemplary and illustrative, not limiting in scope. Specific configurations and details may be set forth in order to provide an understanding of the invention(s). However, it should be apparent to one skilled in the art that the invention(s) may be practiced without some of the specific details being presented herein. Furthermore, some well-known steps or components may be described only generally, or even omitted, for the sake of illustrative clarity. Elements referred to in the singular (e.g., "a widget") may be interpreted to include the possibility of plural instances of the element (e.g., "at least one widget"), unless explicitly otherwise stated (e.g., "one and only one widget").

In some figures, abbreviations (e.g., CF, S, etc.) which have been established for devices and components thereof may be used without accompanying reference numbers to identify various elements in the figures, for illustrative clarity.

In the following descriptions, some specific details may be set forth in order to provide an understanding of the invention(s) disclosed herein. It should be apparent to those skilled in the art that these invention(s) may be practiced without these specific details. In some descriptions, parameters such as dimensions, activation distance, frequency of operation, mode of operation and the like may be discussed, and these should be regarded as exemplary. Any dimensions and materials or processes set forth herein should be considered to be approximate and exemplary, unless otherwise indicated. Headings (typically underlined) may be provided as an aid to the reader, and should not be construed as limiting.

Some processes may be presented and described in a series (sequence) of steps. It should be understood that the sequence of steps is exemplary, and that the steps may be performed in a different order than presented, some steps which are described may be omitted, and some additional steps may be omitted from the sequence and may be described elsewhere.

Reference may be made to disclosures of some prior patents, publications and applications. Some text and drawings from those sources may be presented herein, but may be modified, edited or commented to blend more smoothly with the disclosure of the present application. Citation or identification of any reference should not be construed as an admission that such reference is available as prior art to the disclosure.

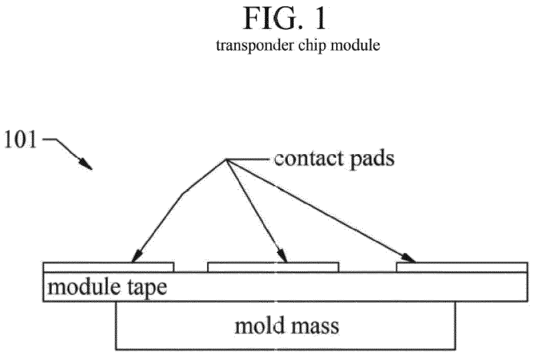

**FIG.** 1 shows an exemplary chip module 101, which may be an antenna module (AM) or a transponder chip module (TCM), comprising a module tape and mold mass encapsulating a chip. In the case of a dual-interface (contact and contactless) chip module, which may be referred to herein as a transponder chip module, a module antenna may be incorporated into the chip module.

### Manufacturing a Plastic-Metal-Plastic Card

Smartcards bearing a metal face may be laminated to one or more layers of plastic. The layers of plastic in the card stack may comprise one or more materials including, but not limited to, Polyvinyl Chloride (PVC), Polycarbonate (PC), Polyethylene terephthalate (PET) or Polyethylene Terephthalate Glycol-modified (PET-G). The construction of such a card typically requires the use of thermally activated adhesives at the interfaces between the plastic layers and metal and, optionally, between one or more plastic layers.

### Use of laminated metal-plastic subassemblies (SAS)

In the following, not participating in the invention, a manufacturing process for a laminated subassembly (SAS) containing one or more sheet metal layers (MLs) for plastic-metal-plastic smartcards may be considered. The general concept is the creation of a subassembly (SAS) constructed from laminated layers of one or more metal sheets and plastic, with appropriate adhesives where required. The subassembly (SAS) may be in the format of a single card or multiple cards separated from each other in a given array. One or more of the plastic layers of the subassembly (SAS) may be considered sacrificial layers that may be subjected to shrinkage and distortion during lamination to the metal layer(s). In subsequent lamination steps the printed core layer(s) and outer layer(s) of the cards may be applied to the subassembly (SAS) using optimum lamination conditions including temperature, time and pressure and, optionally, without the use of additional adhesive layers; i.e. the outermost plastic layer of the subassembly (SAS) may be the same material type as the next adjacent plastic layer or be compatible for direct adhesive-less lamination. In this manner the printed core layer(s) and outer layer(s) may be laminated under their optimum conditions and avoid suffering dimensional distortion during lamination to form a plastic-metal-plastic smartcard. It is noted that by forming the outer layers of the subassembly (SAS) in plastic the subassembly may be considered in a manner similar to a conventional inlay for a smartcard and may be used with similar lamination processes and conditions thereby improving manufacturing yield.

This technique may be applied to cards laminated in single card units as described previously or to appropriate sheet formats containing multiple cards which are subsequently milled, punched or otherwise cut and isolated from the sheet format (e.g. 2 card units by 4 card units). The sheet format may take into consideration the shrinkage characteristics of a given plastic and be may be designed to minimize distortion during lamination along a particular direction; e.g. along a grain direction of a given plastic material.

Below are some general descriptions of components and processes applicable to the inventions disclosed herein:
- Front and rear clear plastic overlays (OLs) which may have a thickness of approximately 50 µm. This layer serves as a protection layer for the plastic-faced smartcard and is typically placed on top of and laminated to the layer(s) bearing printed graphics of the card. The overlay layers may bear card features such as magnetic stripes, holograms or signature panels on top or under them and these may be applied pre or post lamination.
- Front and rear plastic printed core layers (PCLs) which may have thickness typically in the range 75 µm to 125 µm. These layers bear the visible graphics, logos and artwork of the card. The graphics of the printed core layers (PCLs) may be optionally oversized to account for any dimensional changes during lamination.
- Inner plastic layers (IPLs) which may be a plastic layer with thickness typically in the range 20 µm to 100 µm. This layer may not necessarily feature graphics or other features that could be subject to visible distortion in the final card assembly. This layer may be optically transparent. This layer may bear a coating such as a RF transparent thin metal foil or metallic micro-particle coating for decorative effect. The inner plastic layers (IPLs) may be subjected to thermal stress during lamination to metal layers (MLs) by exposure to elevated temperatures exceeding their glass transition temperature (T_{g}) and/or Vicat softening temperatures. An inner plastic layer (IPL) may suffer dimensional shrinkage following lamination to a metal layer (ML) during the formation of a subassembly (SAS). For example, use of a thermoset adhesive requiring exposure to 150 °C temperature would significantly exceed the Vicat B temperature of a PET-G inner plastic layer (IPL) of 82 °C and thus may cause shrinkage or distortion during lamination. In this manner the distortion caused by exposure to elevated temperatures during lamination of the subassembly (SAS) may be tolerated and in this manner the inner plastic layer (IPL) may be considered a sacrificial layer. The inner plastic layer (IPL) may be composed of the same plastic material as a printed core layer (PCL) to permit adhesive-less lamination under optimum conditions and so avoid issues of shrinkage of the printed core layer (PCL) and in turn avoid issues of distortion of graphics or other artwork in the final card assembly. To aid lamination of an inner plastic layer (IPL) to a printed core layer (PCL) or metal layer (ML) the IPL may be treated in some manner to promote adhesion. Examples of suitable treatments include but are not limited to the following:
   ∘ Lamination using textured, rough or matt lamination plates in order to provide a textured outer surface for subsequent lamination steps
   ∘ Immersion or spray treatment with a suitable solvent to alter the surface chemical properties of the plastic and promote adhesion
   ∘ Application of a primer
   ∘ Mechanical roughening by sandpaper, brushing or sandblasting
- Adhesive layers which may be any class of suitable adhesive including but not limited to epoxy, thermoset, UV-cured, hot-melt and pressure-sensitive types. The adhesive may be typically of thickness 10 µm to 75 µm prior to lamination and allowance may be made for shrinkage during curing and lamination. The adhesive may be supported by a plastic membrane or film which may be coated on two sides: e.g. 25 µm PET bearing 25 µm of adhesive on each side. Alternatively the adhesive may be directly deposited onto any of the layers of the card stack-up by spraying, silk screen printing or other means. The adhesive layers (AL) shown or described herein may be distinct from one another in terms of adhesive type, thickness and/or curing conditions for a given exemplary card construction.
- Metal layer(s) (MLs) comprising typically free-standing metal foils or sheets with thickness typically in the range 50 µm to 400 µm. A metal layer (ML) may optionally feature a slit (S) and has a module opening (MO) to enable it to function as a coupling frame (CF). A metal layer (ML) may be composed of any metal or metal alloy including but not limited to steel, aluminum, copper/zinc, titanium and tungsten. The metal layer (ML) itself may be a laminate of multiple metals or a laminate of metals with non-metals such as carbon fiber or wood. The metal layer may feature a dielectric coating or decorative coating or may be electroplated. The metal layer may be finished or treated to promote adhesion to adjacent layers in the card stack-up.
- Features such as slits (S), module openings (MOs) and/or index marks may be formed in one or more of the metal layers prior to lamination to form a given subassembly (SAS). These features may be formed by a variety of techniques including laser cutting, wire electrical discharge machining, chemical etching, etc. The metal layers (MLs) may be any metal type or metal alloy and may have a variety of treatments or finishes including brushing, polishing, chemical priming, anodizing or other coating for any purpose including, for example, decorative effect, adhesion improvement, electrical isolation or corrosion resistance.
- A metal layer (ML) may be laminated to adjacent layers including other metal layers and/or inner plastic layers (IPLs) using processing conditions that are optimum for the chosen adhesive and IPL material.
- In the case of multiple card-sized areas being laminated together in a sheet format, the cards may be punched out from the format into individual units using a punching press and appropriate tooling. Individual cards may be also be formed by milling, laser cutting, water jet cutting or any other suitable means. The process used to isolate the final laminated cards may distort the edges of the cards or leave sharp edges between layers or at the outer edges of the card. In an aspect of the invention the card edges may be beveled, filed or chamfered in a subsequent step to provide appropriately shaped card edges.
- The transponder chip module (TCM) may be in either 8-pin or 6-pin format and be matched to a suitably sized module opening (MO) as appropriate. In addition the position, shape and size of the slit (S) may be adjusted to accommodate either an 8-pin or 6-pin module size. In the case of a 6-pin transponder chip module (TCM) the corresponding module antenna (MA) may require the connection of a capacitor across the antenna ends and across the chip (IC) in order to adjust the resonance frequency of the (TCM) and to enable suitable operational performance of the smartcard when communicating with a reader. A capacitor may also be connected across one or more of the slits (S) of any of the coupling frames (CFs) within a given card.

The techniques disclosed herein may be applicable to either (i) single interface (i.e., contact interface) cards, or to (ii) dual interface (i.e., contact and contactless interfaces) cards. The metal layer (ML) may have an opening to accommodate the mold mass of a chip module. In the case of dual interface cards, the metal layer(s) may also be provided with a slit (S) extending from the opening to an outer edge of the metal layer(s) (MLs) so that the metal layer(s) (MLs) may function as a coupling frame (CF). The metal layer(s) or coupling frame(s) (CFs) may have a stepped opening (or recess) to accept a chip module. A larger portion of the opening may accommodate a module tape of a chip module, and the smaller opening may accommodate the mold mass of a chip module.

The opening in the metal layer may be filled with a plastic slug that may not appear in the final product and may be considered to be a "sacrificial" element.

### Metal veneer dual interface smartcards

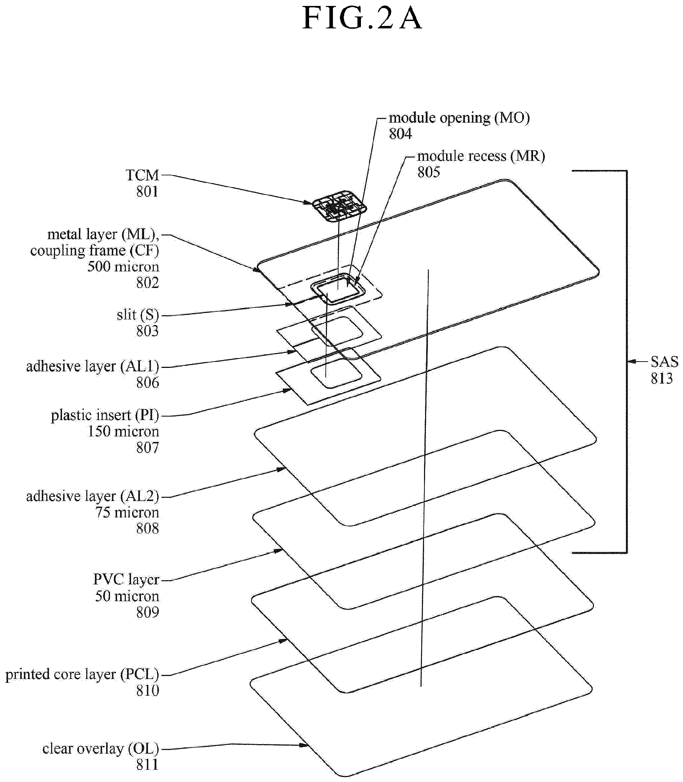

**FIG.** 2A illustrates a metal veneer smartcard with metal layer (ML) 802 acting as a coupling frame with slit (S) 803. The example is not covered by the appended claims but for illustrative purposes. The transponder chip module (TCM) 801 is seated in a module opening (MO) 804 and overlaps a module recess (MR) 805. An adhesive layer (AL1) 806 fixes a plastic insert (PI) 807 into a recess on the reverse side of the metal layer (ML) 802 in order to mechanically stabilize the region around the slit (S) 803. An adhesive layer (AL2) 808 may be used to laminate the metal layer (ML) 802 to an inner plastic or PVC layer 809 along with the plastic insert (PI) 807 in a first lamination step. The adhesive 808 may be transparent. It is noted that this first lamination stack may be an array of many units which may be cut or otherwise isolated from each other upon complete assembly of the smartcard stack. The first lamination produces a subassembly that may be laminated in a subsequent step or steps to a printed core layer (PCL) 810 and other layers such as the outer clear overlay (OL) 811 shown in **FIG.** 2A, the subsequent lamination step(s) may be carried out at conditions of pressure, temperature and time suitable to prevent or minimize distortion, including shrinkage, in the printed core layer (PCL) 810.

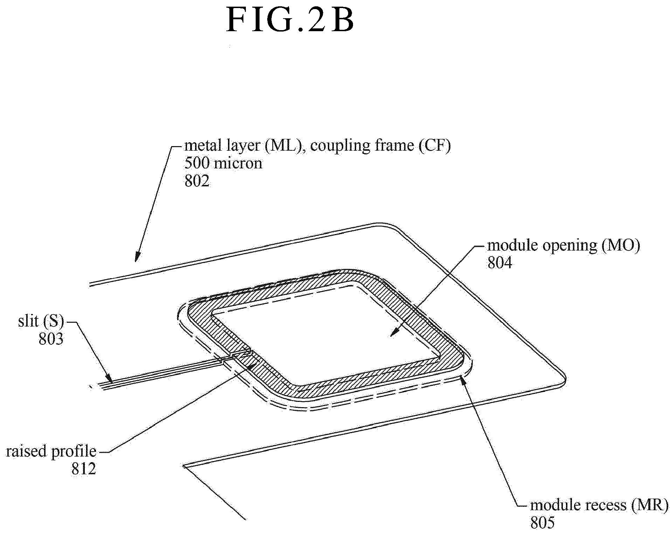

**FIG.** 2B illustrates an aspect whereby the module opening (MO) 804 and module recess (MR) 805 may be milled, cut or etched into the metal layer (ML) 802 in such a manner as to reduce mechanical strain and distortions on the metal layer (ML) 802 in the region around the resultant module opening (MO) 804. For example milling a stainless steel metal layer (ML) 802 of thickness 500 micron with a suitable module recess (MR) 805 will remove approximately 200 micron depth of metal leaving approximately 300 micron thickness behind. Subsequent milling of the reverse side of the metal layer (ML) 802 to produce a recess for a plastic insert (PI) 807 or other feature may result in warping of the remaining metal. To avoid this a raised profile 812 of metal may be left in the area immediately around the module opening (MO) 804, or other region, in order to prevent such distortions.

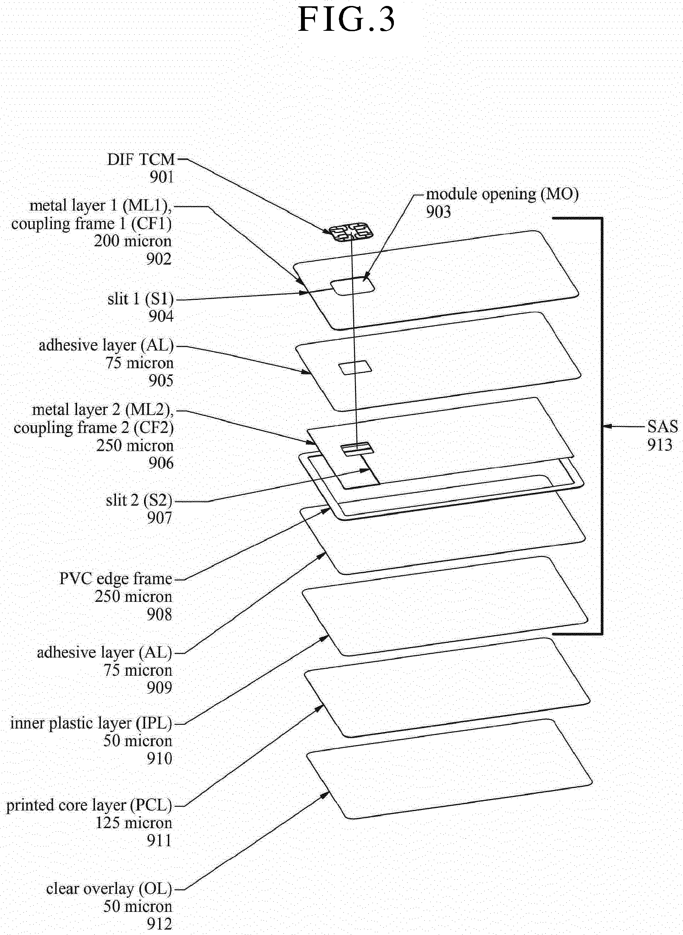

**FIG.** 3 - illustrates an exploded view of a metal veneer smartcard with dual interface transponder chip module (DIF TCM) 901 operating in conjunction with two metal layers (ML1, ML2) 902, 906 each of which features slits (S1, S2) 904, 907 respectively. The example is not covered by the appended claims but for illustrative purposes. The first metal layer (ML1) 902 may be laminated to the second metal layer (ML2) 906 with an adhesive layer (AL) 905. The module opening (MO) 903 in the first metal layer (ML) 902 may be cut or sized to the dimensions of the DIF TCM 901 before lamination, thus preventing the need to mill or work the finished card in order to place the DIF TCM. The overlap between the second metal layer (ML2) and second coupling frame (CF2) with the antenna of the DIF TCM 901 may be defined by the cut or opening formed in this layer before lamination. The second metal layer (ML2) may be used in this manner to act as a stiffener to prevent bending of the finished card, to provide additional weight to the card and/or ease assembly of the card by obviating the need to mill a module opening (MO) into metal during final assembly of the card. The weight of a finished ID-1 format card produced in this manner using stainless steel metal layers may be in the region of 17 grams.

The second metal layer (ML2) may be surrounded by a PVC edge frame as illustrated in order to remove the visibility of the slit (S2) 907 from the edge of the card or to provide a colored or otherwise decorative visible edge to the finished smartcard. In this manner the second metal layer (ML2) 906 may be considered a metal slug within the smartcard. The two metal layers, edge frame and associated adhesives (features 902, 905, 906, 908, 909) along with an inner plastic layer (IPL) 910 may be laminated together in one step to produce a subassembly 913. This may be laminated in subsequent step(s) to a printed core layer(s) (PCL) 911 and clear overlay (OL) 912 thereby facilitating a facile manufacturing process. The final card(s) may be cut or otherwise isolated from an array of laminated layers. It is noted that the one or more of the metal layers (ML) may be connected to each other or feature devices such as capacitors connected across any two points on their surfaces. In addition, the edges of a metal slug layer (ML2) may not necessarily overlap the DIF TCM 901 on all sides and may not overlap the DIF TCM 901 at all in order to effect an efficient electromagnetic coupling to the DIF TCM 901.

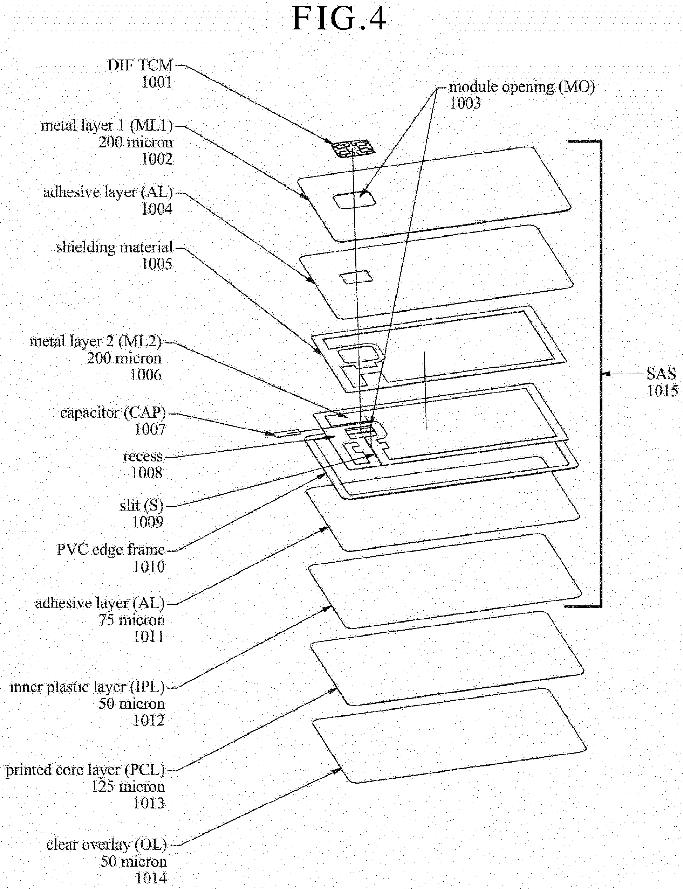

**FIG.** 4 illustrates the invention for the design of a dual interface metal veneer card with no slit (S) on the front face or metal layer 1 (ML1) 1002. The antenna of the DIF TCM 1001 overlaps or is in close proximity to a second metal layer (ML2) 1006 within the smartcard. The second metal layer (ML2) 1006 may feature (be formed with) a slit (S) 1009 to perform as a coupling frame (CF). It features a recess around its periphery. The recess shape may match the shape of a suitable electromagnetic shielding material 1009 chosen to prevent or reduce attenuation of oscillating electromagnetic fields by the front metal layer 1 (ML) 1002 within and around the smartcard device. The recess extends around the perimeter of the second metal layer (ML2) in order to permit placement of the electromagnetic shielding material 1005 in a manner as to cover the periphery of the second metal layer (ML2) within a given distance from its edge. The recess may extend over and around the area defined by the slit (S) 1009. For example the recess, and by extension the shielding material 1005, may cover an area extending 4 mm inwards around the edge of the second metal layer (ML2) 1006. In this manner the recess, and by extension shielding material 1005, may be shaped so as to effectively shield the induced largely peripheral circulating eddy currents in the second metal later (ML2) from the first metal layer (ML1) 1002.

The second metal layer (ML2) may or may not feature a slit (S); in the case that it does not feature a slit (S) the perimeter edge of the second metal layer (ML2) at one or more regions may overlap, or run in close proximity to, the antenna of the DIF TCM 1001 in order to effect electromagnetic coupling. The shielding material 1005 may be sized larger than the second metal layer (ML2) 1006 in order to improve shielding effectiveness. The shielding material 1005 may feature voids or openings or leave selected parts of the second metal layer (ML2) 1006 exposed so as to permit effective electromagnetic coupling between the DIF TCM 1001 and the second metal layer (ML2) 1006. For example, an annulus around the module opening 1003 of the second metal layer (ML2) 1006 may be left uncovered by shielding material to define an overlap with the antenna of the DIF TCM 1001 and prevent disruption of the electromagnetic coupling between the two components.

The second metal layer 1006 is shown as a single loop coupling frame antenna (horseshoe-shaped), such as disclosed in US 15939282 filed 29 March 2018 (PCT/EP2018/058251 filed 29 March 2018). Alternatively, the coupling frame antenna may be replaced by a booster antenna, such as disclosed in US 20130126622**.**

The second metal layer (ML2) may be electrically connected at one or more points to other layers within the smartcard, may operate in conjunction with other antennas placed within the smartcard and may be connected to electronic components included by not limited to capacitors, resistors, LEDs and switches. For example, as illustrated in **FIG.** 4 a surface mounted capacitor (CAP) 1007 may be placed on the second metal layer (ML2) 1006 across the slit (S). A suitable void in the shielding material may be provided to accommodate such a component. In addition, a recess may be provided in the first metal layer (ML1) 1002 to accommodate the height of such a component. It is also conceived that to aid facile manufacture of the smartcard device a suitable solder and solder flux system may be chosen to permit placement of the capacitor or other device with curing of the electrical connection between the device and the metal layer (ML) during one of the lamination cycles used to produce the smartcard stack.

The second metal layer (ML2) 1006 may be smaller than the overall card size and may be framed by a PVC edge frame 1010 or other material. This material may have thickness matching the metal layer (ML2) 1006 or may be thinner or profiles to allow a protrusion of shielding material 1005 around the edge of the second metal layer (ML2) 1006. A function of the PVC edge frame 1010 may be to conceal the presence of shielding material in the smartcard as the shielding material have relatively poor structural properties and appearance when visible or exposed at the smartcard edges.

A subassembly (SAS) 1015 may be formed from a first lamination step from some or all of layers 1002, 1004, 1005, 1006, 1010 along with adhesive layer (AL) 1011 and inner plastic layer (IPL) 1012. This subassembly may exclude metal layer 1 (ML1) and adhesive layer (AL) 1004 which may be added in a separate lamination step depending on the manufacture process chosen. The subassembly (SAS) 1015 may be laminated in a subsequent step(s) to a printed core layer (PCL) 1013 and optionally a clear overlay (OL) 1014.

### Some Additional Disclosures

US 15662305 filed 28 July 2017 (claiming priority of US 62371768 filed 07 Aug 2016) also discloses a method for preventing electrical shorts across a slit in a coupling frame and how to conceal a slit in a coupling frame. In order to prevent electrical shorting of the slit, the coupling frame may be coated in a non-conductive material. This coating may also cover the exposed surfaces of the slit and thereby prevent electrical shorting by materials or fluids that may ingress into the slit. For example a diamond-like-carbon (DLC) coating that is electrically insulating may be applied to a thickness in the range 1-10 micron as a decorative surface finish. The applied coating may also be selected/designed to reduce the overall width of the slit. For example a slit of 25 micron width with overall 4 micron DLC coating may be reduced in width to approximately 17 micron after coating.

A visible slit may detract from the appearance of the card, and may also compromise the mechanical stability of the card. A typical card has a thickness of approximately 0.78 mm (780 µm).

The slit (S) may be filled with a dielectric oxide. The slit may be hidden (or disguised) with a DLC (diamond-like carbon) coating. For example, a slit of 30 microns or less (i.e. width of the laser beam) may be coated with DLC having a thickness of 6 microns. The width of the slit may then be reduced in size by at least 12 microns. So, in essence, the slit resulting may be only 18 microns wide or less. However, DLC provides a gloss finish. To further conceal the slit, the metal layer or card body (such as titanium) may be sand blasted (or glass bead blasted), such as before DLC or PVD (plasma vapor deposition) coating, and the finish will may turn out to be matte (not glossy) so that the slit is nearly impossible to see.

A plastic layer may be laminated to a non-magnetic metal layer or plastic layers laminated to both sides of a non-magnetic metal layer in which the metal layer represents an array of card body sites, with each site provided with a slit to act as a coupling frame, whereby the plastic layer (or layers) extending over the entire surface of the metal layer is used to reinforce the card body construction around the area of the slit. This technique may eliminate the need for an insert to fit a recess in a card body, as a reinforcing member.

Selecting a plastic layer of a given thickness with a certain glass transition temperature, and laminating said substrate with an adhesive backing or a separate adhesive layer having a certain activation temperature to a front or rear face, or to both faces of a single non-magnetic metal layer with a slit and module opening, deliberately filling or partially filling the slit with a combination of the substrate material and adhesive during the lamination process (temperature, cycling profile (hot and cold), process time, and pressure) to stabilize and strengthen the card stack-up construction, before final lamination with the printed core and overlay layers. A synthetic slug may be used to fill or cover the module opening, and may be of the same or different material to that of the plastic layer. The non-magnetic metal layer may have two layers of metal isolated from one another using an adhesive layer as a dielectric, forming a composite metal layer. The non-magnetic metal layers with slits positioned in an offset manner are filled with the substrate material and adhesive during lamination. The combined plastic and non-magnetic metal layer(s) may be a single card body or an inlay having a format representing a multiple of card body positions. The finished card construction may be a metal hybrid having a plastic assembly on the front and rear faces with a metal core sandwiched between both assemblies. A metal veneer card has a front face made of solid metal while the rear comprises of a plastic layer.

In an embodiment of the (present) invention, a metal veneer card (metal front face with a plastic backing layer laminated thereto) may comprise a card size metal layer having an edge thickness of 300 µm, 350 µm or 400 µm, with an inner area (e.g. 7.3 cm x 3.4 cm) of greater thickness (e.g. 600 µm) to mechanically stabilize the card body construction and add weight to the card body. This inner metal area may be surrounded by a plastic layer(s).

In an embodiment of the (present) invention, a metal veneer card may compose of a card size metal layer having an edge thickness of 300 µm, 350 µm or 400 µm, with an inner area (e.g. 7.3 cm x 3.4 cm) comprising of metal slug having a thickness (e.g. 300 µm) to mechanically stabilize the card body construction and add weight. This inner metal slug may be surrounded by a plastic layer(s).

### Smart Cards with Metal Layer

### (based on US 15939282 filed 29 March 2018 and PCT/EP2018/058251 filed 29 March 2018, priority of US 62478589 filed 29 March 2017)

This application describes a smartcard with coupling frame antenna, may correspond with the metal layer ML2 of **FIG.** 4, herein.

According to some embodiments (examples) of the invention, generally a conductive coupling frame antenna (CFA), being a closed loop antenna circuit with a continuous metal track or path, having a rectangular geometry with a slit (S) and module opening (MO), disposed surrounding and overlapping the module antenna (MA) in a transponder chip module (TCM) or antenna module (AM). A transaction card with a continuous metal track or path having a slit (S) extending from a module opening (MO) to a periphery of the card body to function as a coupling frame antenna (CFA). The coupling frame antenna (CFA) may have a track or path width at the module opening equal in dimension to the width of the tracks forming the module antenna in the transponder chip module (TCM) or antenna module (AM). The metal track or path can be chemically etched aluminum, copper, a metallized surface or the like. At the periphery of the card body, the width of the metal track or path is no less than the skin depth of the metal at the frequency of interest. The metal can be replaced by a conductive medium such as silver paste, conductive ink, or the like requiring a greater track or path width to meet the conditions for proper current conduction. The coupling frame antenna (CFA) may resemble a one turn antenna as a closed loop circuit. The coupling frame antenna (CFA) may have multiple turns in a closed circuit design to capture the electromagnetic field, and concentrate a greater surface eddy current density around the area of the slit (S) and module opening (MO), to improve the inductive coupling and ultimately the power delivery to the chip. The coupling frame antenna (CFA) may commence in the center of the card body, extending to the right, forming a conductive path along the perimeter of the card body, forming a loop or module opening at an inner position on the left side of the card body, to surround and overlap a module antenna (MA) of a transponder chip module (TCM) or antenna module (AM), creating a slit by extending the track or path back to the periphery of the card body, and completing the coupling frame antenna structure by returning to the start position within the center of the card body.

A switch may be provided to disenable the antenna circuit by connecting its terminals across the slit (S) of the coupling frame antenna (CFA). A capacitor may be connected across the slit to boost performance. The transponder chip module (TCM) may comprise a laser-etched antenna structure (LES), a chemical-etched antenna structure (CES) and a non-perforated contact pad (CP) arrangement. A coupling frame antenna (CFA) may be incorporated onto the module tape (MT) for a transponder chip module (TCM). US 15939282 filed 29 March 2018 shows a diagram of an exemplary coupling frame antenna (CFA) with a track width of 3 mm. The design shown illustrates a continuous closed loop single track coupling frame antenna (CFA) 202 placed within the perimeter defined by the card body (CB) 201. It is noted that the figure is illustrative of the shape and overall form of the coupling frame antenna (CFA) 202 and that the antenna may reside upon or between any of the layers that may make up a typical smartcard. The outer edges of the coupling frame antenna (CFA) 402 may extend to the periphery of the card body (CB) 201 or be offset from the edge of the smartcard by some distance to aid lamination or other assembly of the smartcard's additional layers. The path defined by the coupling frame antenna (CFA) 201 extends inwards towards and around the module opening (MO) 204. The length, width and track thickness of the coupling frame antenna (CFA) 202 in the vicinity of the module opening (MO) 204 may be set as to provide an optimum overlap with the module antenna (MA) of the transponder chip module (TCM). In this manner an electrical discontinuity in the form of a slit (S) 203 is defined by the coupling frame antenna (CFA) 202. The slit (S) 203 as shown extends from the outer perimeter of the coupling frame antenna (CFA) 202 and intersects the module opening (MO) 204.

While the invention(s) has/have been described with respect to a limited number of embodiments, these should not be construed as limitations on the scope of the invention(s), but rather as examples of some of the embodiments.

## Claims

1. A dual interface metal veneer card comprising:
a dual interface transponder chip module (DIF TCM, 1001) having an antenna;
a first metal layer (ML1, 1002) having a module opening (MO, 1003);
a second metal layer (ML2, 1006) having a module opening (MO, 1003);
wherein the first metal layer does not have a slit;
wherein the antenna of the dual interface transponder chip module overlaps or is in close proximity to the second metal layer;
and comprising an electromagnetic ferrite shielding material (1005) disposed between the first metal layer and the second metal layer;
**characterized in that** the dual interface metal veneer card further comprises:
a recess (1008) around a periphery of the second metal layer to permit placement of the electromagnetic ferrite shielding material (1005) in a manner to cover the periphery of the second metal layer within a given distance from its edge.

2. The dual interface metal veneer card of claim 1, wherein the second metal layer (ML2, 1006) has a slit (S, 1009) to perform as a coupling frame (CF).

3. The dual interface metal veneer card of claim 2, further comprising:
a capacitor (CAP, 1007) placed on the second metal layer, across the slit; and one or more of:
i) a void in the electromagnetic ferrite shielding material to accommodate the capacitor; and/or
ii) a recess in the first metal layer (ML1, 1002) to accommodate a height of the capacitor.

4. The dual interface metal veneer card of claim 1, wherein:
the second metal layer (ML2, 1006) is smaller than an overall card size and is framed by an edge frame (1010) of PVC or another material.

5. The dual interface metal veneer card of claim 4, wherein:
i) the edge frame has a thickness matching that of the second metal layer (ML2, 1006); or
ii) the edge frame is thinner than the second metal layer to allow a protrusion of the electromagnetic ferrite shielding material (1005) around the edge of the second metal layer.

6. The dual interface metal veneer card of claim 1, further comprising:
an annulus around the module opening (MO, 1003) of the second metal layer (ML2, 1006) which is left uncovered by the electromagnetic ferrite shielding material (1005) to define an overlap with the antenna of the dual interface transponder chip module (DIF TCM, 1001).

7. The dual interface metal veneer card of claim 1, further comprising:
an inner plastic layer (IPL, 1012) laminated to a reverse side of the second metal layer (ML2, 1006) opposite to a side of the second metal layer facing the electromagnetic ferrite shielding material (1005).

8. The dual interface metal veneer card of claim 1, comprising a subassembly (SAS, 1015) formed by a first lamination step from the following layers in the given sequence:
the first metal layer (ML1, 1002),
an adhesive layer (AL, 1004),
the electromagnetic ferrite shielding material (1005),
the second metal layer (ML2, 1006) which is smaller than an overall card size,
a PVC edge frame (1010) framing the second metal layer,
another adhesive layer (AL, 1011),
and an inner plastic layer (IPL, 1012).

## Patentansprüche

1. Eine metallverblendete Dual-Interface-Karte umfassend:
ein Dual-Interface-Transponder-Chipmodul (DIF TCM, 1001), eine Antenne besitzend;
eine erste Metallschicht (ML1, 1002), eine Modulöffnung (MO, 1003) besitzend;
eine zweite Metallschicht (ML2, 1006), eine Modulöffnung (MO, 1003) besitzend;
wobei die erste Metallschicht keinen Schlitz hat;
wobei die Antenne des Dual-Interface-Transponder-Chipmoduls mit der zweiten Metallschicht überlappt oder in unmittelbarer Nähe zu der zweiten Metallschicht liegt;
und umfassend ein Abschirmmaterial (1005) aus elektromagnetischen Ferriten, platziert zwischen der ersten Metallschicht und der zweiten Metallschicht,
**dadurch gekennzeichnet, dass** die metallverblendete Dual-Interface- Karte ferner umfasst:
eine Aussparung (1008) im Bereich einer Peripherie der zweiten Metallschicht, um eine Platzierung des Abschirmmaterials (1005) aus elektromagnetischen Ferriten in einer Art zu erlauben, die Peripherie der zweiten Metallschicht innerhalb einer gegebenen Entfernung von seinem Rand damit zu bedecken.

2. Die metallverblendete Dual-Interface-Karte nach Anspruch 1,
wobei die Metallschicht (ML2, 1006) eine Schlitz (S, 1009) hat, um als Kopplungsrahmen (CF) zu funktionieren.

3. Die metallverblendete Dual-Interface-Karte nach Anspruch 2,
ferner umfassend:
eine Kapazität (CAP, 1007), platziert auf der zweiten Metallschicht,
über dem Schlitz;
und eine oder mehrere von:
i) eine Lücke in dem Abschirmmaterial aus elektromagnetischen Ferriten, um die Kapazität zu beherbergen; und/oder
ii) eine Aussparung in der ersten Metallschicht (ML1, 1002), um eine Höhe der Kapazität zu beherbergen.

4. Die metallverblendete Dual-Interface-Karte nach Anspruch 1,
wobei:
die zweite Metallschicht (ML2, 1006) kleiner ist als eine Gesamtkartengröße und eingerahmt ist durch einen Rahmen am Rand (1010) aus PVC oder einem zweiten Material.

5. Die metallverblendete Dual-Interface-Karte nach Anspruch 4,
wobei:
i) der Rahmen am Rand eine Dicke hat, die einer der zweiten Metallschicht (ML2, 1006) entspricht; oder
ii) der Rahmen am Rand dünner ist als die zweite Metallschicht, um einen Überstand des Abschirmmaterials (1005) aus elektromagnetischen Ferriten im Bereich des Rands der zweiten Metallschicht zu erlauben.

6. Die metallverblendete Dual-Interface-Karte nach Anspruch 1,
ferner umfassend:
einen Kranz um die Modulöffnung (MO, 1003) der zweiten Metallschicht (ML2, 1006), welcher unbedeckt von dem Abschirmmaterial (1005) aus elektromagnetischen Ferriten bleibt, um eine Überlappung mit der Antenne des Dual-Interface-Transponder-Chipmoduls (DIF TCM, 1001) zu erreichen.

7. Die metallverblendete Dual-Interface-Karte nach Anspruch 1,
ferner umfassend:
eine innere Kunststoffschicht (IPL, 1012), laminiert zu einer Rückseite der zweiten Metallschicht (ML2, 1006), die gegenüberliegend zu einer Seite der zweiten Metallschicht ist, die dem Abschirmmaterial aus elektromagnetischen Ferriten zugewandt ist.

8. Die metallverblendete Dual-Interface-Karte nach Anspruch 1,
umfassend eine Baugruppe (SAS, 1015), ausgebildet durch einen ersten Laminierungsschritt aus den folgenden Schichten in der gegebenen Reihenfolge:
die erste Metallschicht (ML1, 1002),
eine Klebeschicht (AL, 1004),
das Abschirmmaterial (1005) aus elektromagnetischen Ferriten,
die zweite Metallschicht (ML2, 1006), welche kleiner ist als eine Gesamtkartengröße,
einen PVC-Randrahmen (1010), umrahmend die zweite Metallschicht,
eine weitere Klebeschicht (AL, 1011)
und eine innere Kunststoffschicht (IPL, 1012).

## Revendications

1. Carte recouverte de métal à interface double comprenant :
un module de puce de transpondeur à interface double (DIF TCM, 1001) ayant une antenne ;
une première couche métallique (ML1, 1002) ayant une ouverture de module (MO, 1003) ;
une deuxième couche métallique (ML2, 1006) ayant une ouverture de module (MO, 1003) ;
dans laquelle la première couche métallique n'a pas de fente ;
dans laquelle l'antenne du module de puce de transpondeur à interface double chevauche ou est à proximité étroite de la deuxième couche métallique ;
et comprenant un matériau de blindage en ferrite électromagnétique (1005) disposé entre la première couche métallique et la deuxième couche métallique ;
**caractérisée en ce que** la carte recouverte de métal à interface double comprend en outre :
un évidement (1008) autour de la périphérie de la deuxième couche métallique pour permettre le placement du matériau de blindage en ferrite électromagnétique (1005) de manière à couvrir la périphérie de la deuxième couche métallique à l'intérieur d'une distance donnée depuis son bord.

2. Carte recouverte de métal à interface double selon la revendication 1, dans laquelle la deuxième couche métallique (ML2, 1006) a une fente (S, 1009) destinée à se comporter comme un cadre de couplage (CF).

3. Carte recouverte de métal à interface double selon la revendication 2, comprenant en outre :
un condensateur (CAP, 1007) placé sur la deuxième couche métallique, à travers la fente ; et un ou plusieurs parmi :
i) un vide dans le matériau de blindage en ferrite électromagnétique pour loger le condensateur ; et/ou
ii) un évidement dans la première couche métallique (ML1, 1002) pour loger une hauteur du condensateur.

4. Carte recouverte de métal à interface double selon la revendication 1, dans laquelle :
la deuxième couche métallique (ML2, 1006) est plus petite que la taille globale de la carte et est encadrée par un cadre de bord (1010) en PVC ou en un autre matériau.

5. Carte recouverte de métal à interface double selon la revendication 4, dans laquelle :
i) le cadre de bord a une épaisseur correspondant à celle de la deuxième couche métallique (ML2, 1006) ; ou
ii) le cadre de bord est plus mince que la deuxième couche métallique pour permettre une saillie du matériau de blindage en ferrite électromagnétique (1005) autour du bord de la deuxième couche métallique.

6. Carte recouverte de métal à interface double selon la revendication 1, comprenant en outre :
une bague autour de l'ouverture de module (MO, 1003) de la deuxième couche métallique (ML2, 1006) qui est laissée non recouverte par le matériau de blindage en ferrite électromagnétique (1005) pour définir un chevauchement avec l'antenne du module de puce de transpondeur à interface double (DIF TCM, 1001).

7. Carte recouverte de métal à interface double selon la revendication 1, comprenant en outre :
une couche plastique intérieure (IPL, 1012) stratifiée sur un côté envers de la deuxième couche métallique (ML2, 1006) à l'opposé d'un côté de la deuxième couche métallique faisant face au matériau de blindage en ferrite électromagnétique (1005).

8. Carte recouverte de métal à interface double selon la revendication 1, comprenant un sous-assemblage (SAS, 1015) formé par une première étape de stratification à partir des couches suivantes selon la séquence indiquée ;
la première couche métallique (ML1, 1002),
une couche adhésive (AL, 1004),
le matériau de blindage en ferrite électromagnétique (1005),
la deuxième couche métallique (ML2, 1006) qui est plus petite que la taille globale de la carte,
un cadre de bord en PVC (1010) encadrant la deuxième couche métallique,
une autre couche adhésive (AL, 1011),
et une couche plastique intérieure (IPL, 1012).
